# EUROPEAN PATENT SPECIFICATION

(11) **EP 4 496 193 B1**
(45) Date of publication and mention of the grant of the patent: **24.12.2025**
(21) Application number: 23881514.6
(22) Date of filing: 15.09.2023
(51) Int. Cl.: H02K 9/28, H02K 13/00, H01R 39/14, H01R 39/08, H01R 39/12, H01R 39/34, H02K 7/00, H02K 5/22

(54) **CONNECTION STRUCTURE FOR ELECTRIC GENERATOR ROTATING SHAFT AND EXTERNAL SLIP RING SHAFT**
VERBINDUNGSSTRUKTUR FÜR EINE DREHWELLE EINES ELEKTRISCHEN GENERATORS UND EXTERNE SCHLEIFRINGWELLE
STRUCTURE DE LIAISON POUR ARBRE ROTATIF DE GÉNÉRATEUR ÉLECTRIQUE ET ARBRE À BAGUE COLLECTRICE EXTERNE

(30) Priority: 28.10.2022 CN 202211331547
(43) Date of publication of application: 22.01.2025
(73) Proprietor: Dongfang Electric Machinery Co., Ltd., Deyang, Sichuan 618000 (CN)
(72) Inventor: GUAN, Yongsheng, Deyang, Sichuan 618000 (CN); YANG, Di, Deyang, Sichuan 618000 (CN); WANG, Yong, Deyang, Sichuan 618000 (CN); LU, Yongyao, Deyang, Sichuan 618000 (CN); QIN, Chuan, Deyang, Sichuan 618000 (CN); JIANG, Qunxiong, Mianyang, Sichuan 618000 (CN); LI, Dian, Deyang, Sichuan 618000 (CN)
(74) Representative: Santarelli
(86) International application number: PCT/CN2023/119247
(87) International publication number: WO 2024/087934

(56) References cited:
- EP-A1- 3 767 804
- CN-A- 101 651 385
- CN-A- 102 611 253
- CN-A- 103 081 310
- CN-A- 115 395 335
- CN-U- 205 105 053
- GB-A- 2 078 017
- US-A- 4 267 475
- US-A- 4 618 793

## Description

### Technical Field

The present invention relates to the technical field of turbine-generator static excitation, in particular to a structure connecting a generator rotating shaft and an external slip ring shaft.

### Background of the Invention

At present, for a static excitation generator with a non-integrally forged rotating shaft, a generator rotating shaft body is connected to a small shaft of an external slip ring shaft mainly with two methods:
in method 1, disposing a flexible conductive wire on surfaces of the rotating shaft and the slip ring shaft, electrically connecting the flexible conductive wire to each conductive rod located in the center of the rotating shaft and the slip ring shaft through a conductive screw, and assisting conduction through a sleeve pin structure on butt end faces of the rotating shaft and the slip ring shaft.
in method 2, moving the conductive screws in method 1 close to the connecting end faces of the rotating shaft and the slip ring shaft, so that the flexible conductive wire crosses the connecting end faces and connects the two conductive screws, thus achieving conduction by direct jumper.

The problems in the prior art are shown as follows: the flexible conductive wire is located on the outer surfaces of the rotating shaft and the slip ring shaft, the flexible conductive wire is less reliable under the action of centrifugal force during high-speed rotation, and the stability of the excitation current is degraded. That is, the strength of the mechanical structure is not guaranteed, so the risk of circuit disconnection easily occurs during use. In addition, the excitation circuit produces a lot of heat during operation, and the work efficiency of the excitation circuit will be affected if the heat dissipation is not controlled in time. In the above-mentioned connection methods, the air exposure of the flexible conductive wire has a positive effect on heat dissipation, but the heat produced by the conductive rods inside the rotating shaft and the slip ring shaft cannot be released due to the sealed end faces. Also, the above-mentioned two connection methods are difficult to be implemented in a static excitation generator transformed from brushless excitation due to the fact that a conductive screw of a generator rotor body is far from a flange. Particularly, in a hydrogen-cooled generator, the conductive screw is still within the boundary of hydrogen seal for sealing purpose.

Therefore, the rotating shaft connection treatment for the static excitation generators of the prior art needs to be optimized and improved to intensify the strength of mechanical connection, the reliability of electrical connection and the heat dissipation performance. Therefore, there is a need to put forward a more reasonable technical solution to solve the technical problems in the prior art, to which the following two documents belong: CN 103 081 310 A and US 4 267 475 A.

### Summary of the Invention

To overcome at least one of the above-mentioned defects, the present invention provides a structure connecting a generator rotating shaft and an external slip ring shaft to reconfigure connection arrangement of flexible conductive parts, improve the installation reliability of the flexible conductive parts, guarantee reliable connection of an excitation circuit, and release heat of the excitation circuit and end faces of the rotating shaft and the slip ring shaft, thereby guaranteeing working reliability of a static excitation generator.

To achieve the above-mentioned objectives, the technical solutions of a connecting structure disclosed by the present invention are as follows:
A structure connecting a generator rotating shaft and an external slip ring shaft, which comprises:
a rotating shaft and a slip ring shaft in a coaxial butt joint, wherein butt joint faces are provided with a connecting cavity for fixing an excitation conductive structure, and a conductive rod is arranged in each of the rotating shaft and the slip ring shaft;
a plurality of insulation components circumferentially arranged in the connecting cavity at an equidistant interval, which comprise an insulation part connected to each of the rotating shaft and the slip ring shaft, wherein the insulation parts comprise two mounting surfaces for installation of flexible conductive parts;
the plurality of flexible conductive parts arranged on the mounting surfaces and interconnected with the conductive rods, wherein a gap is maintained between the flexible conductive parts connected to the conductive rod on the rotating shaft side and the flexible conductive parts connected to the conductive rod on the slip ring shaft side, and the gap is filled with an electric connection block and is used to conduct the flexible conductive parts on the rotating shaft side and the flexible conductive parts on the slip ring shaft side; and
a heat dissipation structure penetrating into the connecting cavity from an outer surface of the rotating shaft or the slip ring shaft.

According to the connecting structure disclosed above, by disposing the excitation conductive structure through the connecting cavity, the excitation conductive structure is moved from outer sides of the rotating shaft and the slip ring shaft to the connecting end faces therebetween, thus protecting the excitation conductive structure. In addition, the flexible conductive parts are installed by use of the insulation parts to facilitate achieving insulation between the flexible conductive parts and the connecting end faces, and the thickness of the electric connection block disposed between the flexible conductive parts are set according to an actual gap size, so as to ensure reliable connection of the flexible conductive parts and the reliability of electrical connection. The heat dissipation structure releases the heat produced in the connecting cavity to reduce the temperature in the connecting cavity, so that the excitation conductive structure works at a suitable ambient temperature, thereby reducing the potential safety hazard and effectively prolonging the effective working life of the excitation conductive structure.

Further, according to the present invention, the rotating shaft and the slip ring shaft are in a butt joint and realize coaxial rotation. In order to ensure coaxiality, the butt joint can be realized in various manners, and the structure used for coaxial limitation is not uniquely defined. The optimization is made and one of the feasible options is given as follows: the connecting surfaces between the rotating shaft and the slip ring shaft are provided with a positioning spigot structure for maintaining the coaxial connection. With such a solution, the positioning spigot structure comprises a depressed receptacle and a raised protrusion, and a center of the depressed receptacle or the raised protrusion is on the axis of the rotating shaft or the slip ring shaft where the depressed receptacle or the raised protrusion is located respectively, so that the required coaxiality is attained upon coaxial butt joint.

Further, the rotating shaft and the slip ring shaft remain fixed after being coaxially butted. The optimization is made and one of the feasible fixed structures is given as follows: a plurality of butting holes are correspondingly arranged on the connecting surfaces between the rotating shaft and the slip ring shaft, a sleeve pin is provided at each of openings of the butting holes, and the rotating shaft and the slip ring shaft are connected and fixed by connecting pieces passing through the butting holes and the sleeve pins. With such a solution, the butting holes are configured as stepped holes, wherein the outer stepped holes have a larger diameter and are used for receiving the sleeve pins, and an inner diameter of the sleeve pins is the same as a diameter of the inner stepped holes. When fixing with the connecting pieces, the connecting pieces completely fit with the inner stepped holes and the sleeve pins, thereby achieving the fixed connection and protecting the openings of the connecting holes.

Further, according to the present invention, the insulation components are used to guarantee insulation between the flexible conductive parts and the connecting cavity, and the structure of the insulation components is not uniquely defined. The optimization is made and one of the feasible options is given as follows: the insulation components further comprise insulating wedges arranged in the connecting cavity, and the flexible conductive parts and the electric connection block are insulatively isolated from an inner wall of the connecting cavity by the insulating wedges. With such a solution, the insulating wedges may be arranged in a multi-layer overlapped structure, and a thickness of each of the insulating wedges is set according to the distance from the flexible conductive parts and the electric connection block to the inner wall of the connecting cavity.

Furthermore, according to the present invention, to achieve a better arrangement of the flexible conductive parts, the insulation components may be configured into sectional structures. The optimization is made and one of the preferred feasible options is given as follows: the insulation components comprise rotating shaft-side insulation parts matched with a connecting end face of the rotating shaft and slip ring shaft-side insulation parts matched with a connecting end face of the slip ring shaft; and the rotating shaft-side insulation parts comprise the mounting surfaces flush with an end face of the conductive rod on the rotating shaft side and are used to connect and fix the flexible conductive parts, and the slip ring shaft-side insulation parts comprise the mounting surfaces flush with an end face of the conductive rod on the slip ring shaft side and are used to install the flexible conductive parts. With such a solution, the rotating shaft-side insulation parts and the slip ring shaft-side insulation parts are connected and matched with the rotating shaft and the slip ring shaft respectively, and the corresponding insulation parts are fixed by use of fasteners. In order to ensure reliable insulation, the corresponding insulation parts are configured with counterbores, the fasteners enter the counterbores and keep a safe insulation gap with openings of the counterbores, or the counterbores are insulatively sealed after arrangement of the fasteners.

Furthermore, in order to prevent the flexible conductive parts from shaking during high-speed rotation, they are laterally limited. The optimization is made and one of the feasible options is given as follows: the mounting surfaces are provided with insulated retaining edge structures, and the insulated retaining edge structures are located at outer sides of the flexible conductive parts and insulatively isolate the flexible conductive parts from the inner wall of the connecting cavity. With such a solution, the retaining edge structures are matched with the mounting surfaces to form groove structures, and the flexible conductive parts are blocked on either side by the insulated retaining edge structures to maintain stability and achieve a better insulation performance.

Further, according to the present invention, the heat dissipation structure is provided with various feasible options, and its structure is not uniquely defined. The optimization is made and one of the feasible options is given as follows: the heat dissipation structure comprises a radial ventilation hole interconnected to the connecting cavity from a side surface of the rotating shaft or the slip ring shaft. With such a solution, the radial ventilation holes are uniformly distributed on the side surface, which introduce a plurality of air flows to achieve a better heat dissipation effect.

Furthermore, the heat dissipation structure is also provided with other options, for example: the heat dissipation structure comprises an axial ventilation hole interconnected to the connecting cavity from the side surface of the rotating shaft or the slip ring shaft and aligned with the flexible conductive parts and the electric connection block. With such a solution, the axial ventilation hole has a larger diameter and a better heat dissipation effect, and forms a complete circulation passage with the radial ventilation holes, thus facilitating heat dissipation in the connecting cavity. In addition, the flexible conductive parts and the electric connection block are fastened and connected from the outside through the axial ventilation hole to improve the convenience of installation and disassembly, thereby minimizing the size of the connecting surfaces between the rotating shaft and the slip ring shaft and simplifying the machining process.

Further, to improve the reliability of the connecting structure, so that an insulation effect between the flexible conductive parts and the side wall surface of the connecting cavity is guaranteed, optimization is made and a feasible option is given as follows: the axial ventilation hole is provided with a blocking member, and the blocking member extends in the radial direction and fits with the blocking insulating wedges in the axial direction. With such a solution, the blocking member may be provided with a blocking plate, which fits with an external side wall surface of the axial ventilation hole and is connected and fixed by a fastener for the convenience of installation and maintenance.

Further, according to the present invention, the flexible conductive parts may conduct electricity with various solutions, including using a conducting bar and other structures. Optimization is made and one of the feasible options is given as follows: the flexible conductive parts each comprise a flat strip-shaped main body, an upper portion of the main body is configured with an upper group of holes for connecting to the electric connection block, and a lower portion of the main body is configured with a lower group of holes for connecting to the conductive rod. With such a solution, the upper portions and the lower portions of the flexible conductive parts are connected and fixed, so that the flexible conductive parts remain stable even in high-speed operation.

Compared with the prior art, the technical solution disclosed by the present invention has the following beneficial effects:
The connecting structure provided by the present invention maintains the coaxiality between the rotating shaft and the slip ring shaft. In addition, an excitation conductive structure is provided in the butt joint faces between the shafts, the whole structure is stable and reliable, and components are prevented from shaking or falling off under the action of centrifugal force during high-speed operation, thus achieving a good protection effect on the excitation structure and guaranteeing a reliable electrical matching. Additionally, the heat at the connecting surfaces is released through the heat dissipation structure to prevent an excess of internal temperature and guarantee the working conditions of the excitation conductive structure, thus improving the reliability of the overall connecting structure.

### Brief Description of the Drawings

In order to illustrate the technical solutions of the embodiments of the present invention more clearly, accompanying drawings used in the embodiments will be introduced below briefly. It should be understood that the drawings described below show some embodiments of the present invention only, and should not be construed as restriction to the scope. Those of ordinary skill in the art can also obtain other drawings based on those drawings without creative effort.
Fig. 1 shows a structural schematic diagram of an overall connecting structure;
Fig. 2 shows an exploded view of the connecting structure;
Fig. 3 shows a structural schematic diagram of an overall connecting cavity;
Fig. 4 shows a sectional view of the structure of the connecting cavity;
Fig. 5 shows an enlargement view of partial structure in Fig. 4;
Fig. 6 shows a structural schematic diagram of a flexible conductive part; and
Fig. 7 shows a schematic diagram of the installation structure of the flexible conductive part.

Description of symbols used in the drawings above:
1. rotating shaft; 2. conductive rod; 3. slip ring shaft; 4. shaft collar; 401. radial ventilation hole; 5. insulation component; 501. rotating shaft-side insulation part; 502. slip ring shaft-side insulation part; 6. insulating wedge; 7. retaining edge structure; 8. flexible conductive part; 9. connecting cavity; 10. axial ventilation hole; 11. blocking member; 12. electric connection block; 13. sleeve pin; 14. connecting piece.

### Detailed Description of Embodiments

The present invention will be further described below in conjunction with accompanying drawings and specific embodiments.

In view of a less reliable static excitation connecting structure and vulnerable flexible conductive parts under centrifugal force in the prior art, and other problems arising from external arrangement of an excitation conductive structure, the following embodiment provides an optimization and improvement to overcome the defects of the prior art.

### Examples

This embodiment provide a structure connecting a generator rotating shaft 1 and an external slip ring shaft 3 to dispose an excitation conductive structure inside, and improve a static excitation conductive structure, an overall structure reliability and an electrical reliability, so as to achieve a more stable and reliable connecting structure.

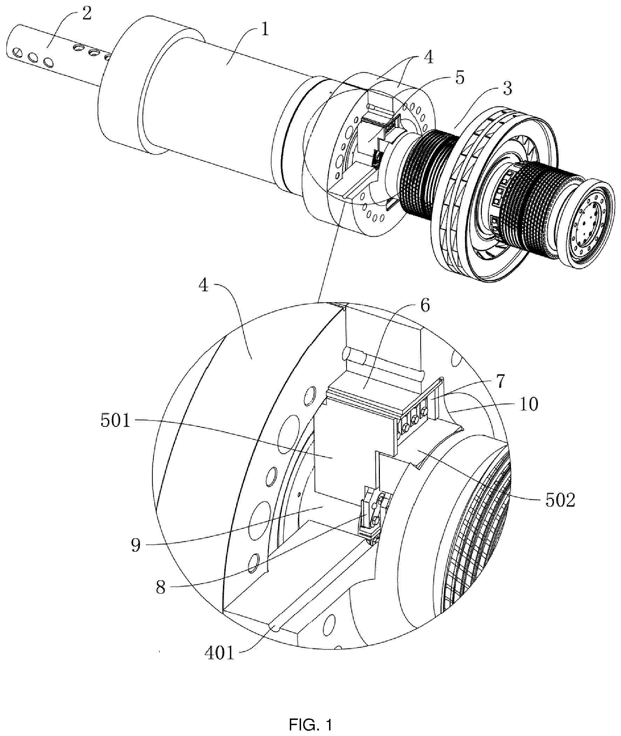

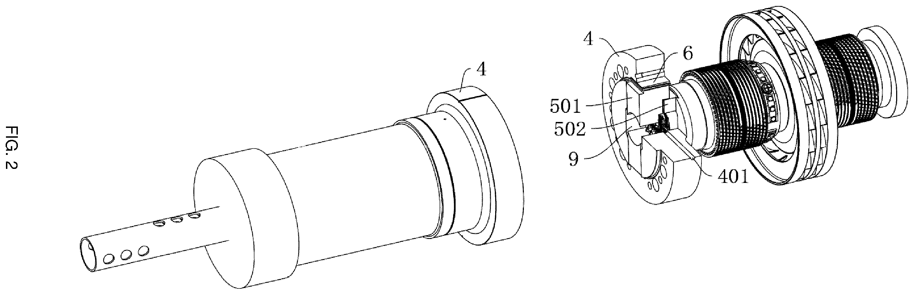

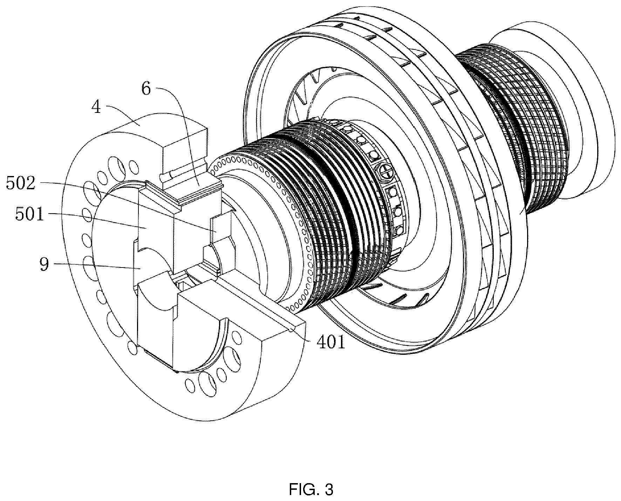

As shown in Figs. 1, 2 and 3, as the connecting structure provided by this embodiment, one structure comprises:
The rotating shaft 1 and the slip ring shaft 3 in a coaxial butt joint, wherein butt joint faces are provided with a connecting cavity 9 for fixing the excitation conductive structure, and a conductive rod 2 is arranged in each of the rotating shaft 1 and the slip ring shaft 3.

In this embodiment, the rotating shaft 1 and the slip ring shaft 3 are in a butt joint and realize coaxial rotation. In order to ensure coaxiality, the butt joint can be realized in various manners, and the structure used for coaxial limitation is not uniquely defined. This embodiment provides an optimization and adopts one of the feasible options: the connecting surfaces between the rotating shaft 1 and the slip ring shaft 3 are provided with a positioning spigot structure for maintaining the coaxial connection. With such a solution, the positioning spigot structure comprises a depressed receptacle and a raised protrusion, and a center of the depressed receptacle or the raised protrusion is on the axis of the rotating shaft 1 or the slip ring shaft 3 where the depressed receptacle or the raised protrusion is located respectively, so that the required coaxiality is attained upon coaxial butt joint.

Preferably, in this embodiment, shaft collar 4 structures are provided at the joint between the rotating shaft 1 and the slip ring shaft 3, and the shaft collar 4 structures are opposite to each other and form a larger whole, which is used for disposing the internal connecting cavity 9, and opposite surfaces of the shaft collar 4 structures are used to dispose a connecting piece 14 for connection.

Preferably, in this embodiment, a concave cavity is provided in the shaft collar 4 structure of the rotating shaft 1 and/or the slip ring shaft 3 to form the connecting cavity 9.

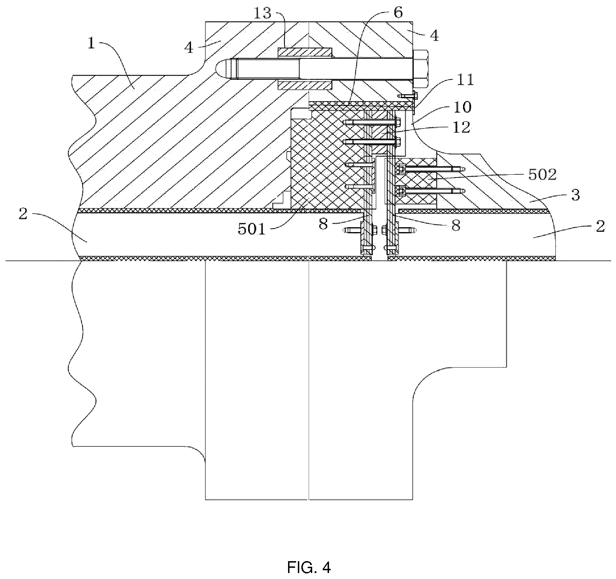

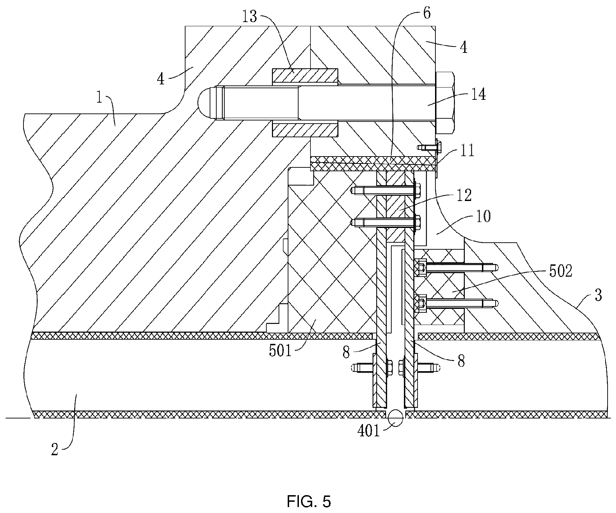

Preferably, as shown in Figs. 4 and 5, the rotating shaft 1 and the slip ring shaft 3 remain fixed after being coaxially butted. This embodiment provides an optimization and adopts one of the feasible fixed structures: a plurality of butting holes are correspondingly arranged on the connecting surfaces between the rotating shaft 1 and the slip ring shaft 3, a sleeve pin 13 is provided at each of openings of the butting holes, and the rotating shaft 1 and the slip ring shaft 3 are connected and fixed by the connecting pieces 14 passing through the butting holes and the sleeve pins 13. With such a solution, the butting holes are configured as stepped holes, wherein the outer stepped holes have a larger diameter and are used for receiving the sleeve pins 13, and an inner diameter of the sleeve pins 13 is the same as a diameter of the inner stepped holes. When fixing with the connecting pieces 14, the connecting pieces 14 completely fit with the inner stepped holes and the sleeve pins 13, thereby achieving the fixed connection and protecting the openings of the connecting holes.

Preferably, in this embodiment, the inner stepped holes are configured with threads, and the connecting pieces 14 are provided with connecting bolts.

As shown in Figs. 4 and 5, as the connecting structure provided by this embodiment, another structure comprises:
A plurality of insulation components 5 that are circumferentially arranged in the connecting cavity 9 at an equidistant interval to isolate the excitation conductive structure and the inner wall of the connecting cavity 9, and comprise an insulation part connected to each of the rotating shaft 1 and the slip ring shaft 3, wherein the insulation parts comprise two mounting surfaces for installation of flexible conductive parts 8.

Preferably, the insulation parts may be made of plastic, insulating ceramics or other materials, and they are fixedly connected to the inner wall surface of the connecting cavity 9.

In this embodiment, the insulation components 5 are used to guarantee insulation between the flexible conductive parts 8 and the connecting cavity 9, and the structure of the insulation components 5 is not uniquely defined. The optimization is made and one of the feasible options is adopted as follows: the insulation components 5 further comprise insulating wedges 6 arranged in the connecting cavity 9, and the flexible conductive parts 8 and the electric connection block 12 are insulatively isolated from an inner wall of the connecting cavity 9 by the insulating wedges 6. With such a solution, the insulating wedges 6 may be arranged in a multi-layer overlapped structure, and a thickness of each of the insulating wedges 6 is set according to the distance from the flexible conductive parts 8 and the electric connection block 12 to the inner wall of the connecting cavity 9.

The insulating wedges 6 are normally compressed against the flexible conductive parts 8 and the electric connection block 12 and fit with the inner wall of the connecting cavity 9. Even in the process of high-speed rotation, the insulating wedges 6 remain stable. Also, the flexible conductive parts 8 partially deformed under the action of centrifugal force are well blocked and insulated by the insulating wedges 6.

In this embodiment, the insulating wedges 6 may be made of rigid materials, including plastic and insulating ceramics; or flexible materials, including insulating rubber.

In some embodiments, to achieve a better arrangement of the flexible conductive parts 8, the insulation components 5 may be configured into sectional structures. For example, the optimization is made and one of the preferred feasible options is adopted: as shown in Figs. 4 and 5, the insulation components 5 comprise rotating shaft-side insulation parts 501 matched with a connecting end face of the rotating shaft 1 and slip ring shaft-side insulation parts 502 matched with a connecting end face of the slip ring shaft 3; and the rotating shaft-side insulation parts 501 comprise the mounting surfaces flush with an end face of the conductive rod 2 on the rotating shaft 1 side and are used to connect and fix the flexible conductive parts 8, and the slip ring shaft-side insulation parts 502 comprise the mounting surfaces flush with an end face of the conductive rod 2 on the slip ring shaft 3 side and are used to install the flexible conductive parts 8. With such a solution, the rotating shaft-side insulation parts 501 and the slip ring shaft-side insulation parts 502 are connected and matched with the rotating shaft 1 and the slip ring shaft 3 respectively, and the corresponding insulation parts are fixed by use of fasteners. In order to ensure reliable insulation, the corresponding insulation parts are configured with counterbores, the fasteners enter the counterbores and keep a safe insulation gap with openings of the counterbores, or the counterbores are insulatively sealed after arrangement of the fasteners.

Preferably, the material of the insulation parts of the rotating shaft 1 and the slip ring shaft-side insulation parts 502 is selected between a rigid material and a flexible material. The rigid material is normally selected to guarantee better mechanical strength.

In this embodiment, in order to prevent the flexible conductive parts 8 from shaking during high-speed rotation, they are laterally limited. This embodiment provides an optimization and adopts one of the feasible options: as shown in Fig.1, the mounting surfaces are provided with insulated retaining edge structures 7, and the insulated retaining edge structures 7 are located at outer sides of the flexible conductive parts 8 and insulatively isolate the flexible conductive parts 8 from the inner wall of the connecting cavity 9. With such a solution, the retaining edge structures 7 are matched with the mounting surfaces to form groove structures, and the flexible conductive parts 8 are blocked on either side by the insulated retaining edge structures 7 to maintain stability and achieve a better insulation performance.

Preferably, in this embodiment, the insulated retaining edge structures 7 and the insulation parts are integrated.

To improve the reliability of the connecting structure, so that an insulation effect between the flexible conductive parts 8 and the side wall surface of the connecting cavity 9 is guaranteed, This embodiment provides an optimization and adopts one of the feasible options as follows: as shown in Fig. 4 and 5, the axial ventilation hole 10 is provided with a blocking member 11, and the blocking member 11 extends in the radial direction and fits with the blocking insulating wedges 6 in the axial direction. With such a solution, the blocking member 11 may be provided with a blocking plate, which fits with an external side wall surface of the axial ventilation hole 10 and is connected and fixed by a fastener for the convenience of installation and maintenance.

Preferably, the blocking member 11 is provided with a blocking piece, and the blocking piece is bolted on the outer surface of the rotating shaft 1 or the slip ring shaft 3.

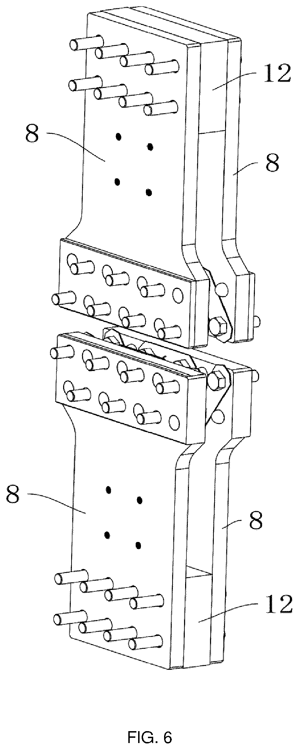

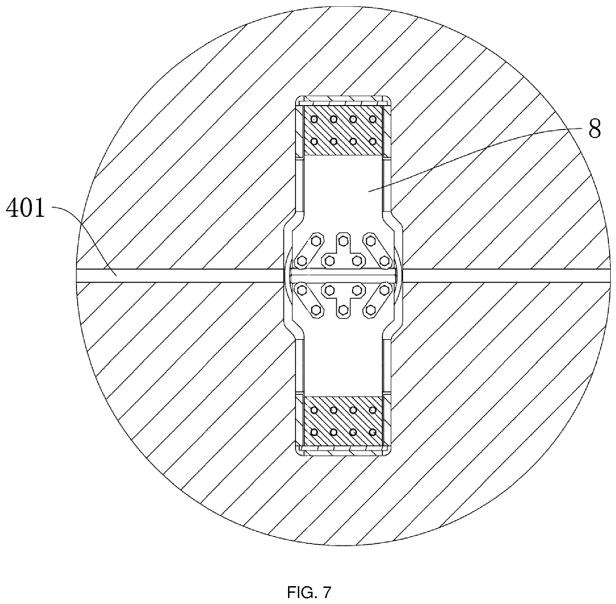

As shown in Figs. 6 and 7, as the connecting structure provided by this embodiment, yet another structure comprises:
The plurality of flexible conductive parts 8 arranged on the mounting surfaces and interconnected with the conductive rods 2, wherein a gap is maintained between the flexible conductive parts 8 connected to the conductive rod 2 on the rotating shaft 1 side and the flexible conductive parts 8 connected to the conductive rod 2 on the slip ring shaft 3 side, and the gap is filled with the electric connection block 12 and is used to conduct the flexible conductive parts 8 on the rotating shaft 1 side and the flexible conductive parts 8 on the slip ring shaft 3 side.

Preferably, in this embodiment, the flexible conductive parts 8 may conduct electricity with various solutions, including using a conducting bar and other structures. This embodiment provides an optimization and adopts one of the feasible options: the flexible conductive parts 8 each comprise a flat strip-shaped main body, an upper portion of the main body is configured with an upper group of holes for connecting to the electric connection block 12, and a lower portion of the main body is configured with a lower group of holes for connecting to the conductive rod 2. With such a solution, the upper portions and the lower portions of the flexible conductive parts 8 are connected and fixed, so that the flexible conductive parts 8 remain stable even in high-speed operation.

As shown in Figs. 1 to 5, as the connecting structure provided by this embodiment, still another structure comprises:
A plurality of heat dissipation structures penetrating into the connecting cavity 9 from an outer surface of the rotating shaft 1 or the slip ring shaft 3.

In this embodiment, the heat dissipation structures are provided with various feasible options, and their structures are not uniquely defined. This embodiment provides an optimization and adopts one of the feasible options: the heat dissipation structures each comprise a radial ventilation hole 401 interconnected to the connecting cavity 9 from a side surface of the rotating shaft 1 or the slip ring shaft 3. With such a solution, the radial ventilation holes 401 are uniformly distributed on the side surface, which introduce a plurality of air flows to achieve a better heat dissipation effect.

In some feasible embodiments, the heat dissipation structure is also provided with other options, for example: the heat dissipation structure comprises an axial ventilation hole 10 interconnected to the connecting cavity 9 from the side surface of the rotating shaft 1 or the slip ring shaft 3 and aligned with the flexible conductive parts 8 and the electric connection block 12. With such a solution, the axial ventilation hole 10 has a larger diameter and a better heat dissipation effect, and forms a complete circulation passage with the radial ventilation holes 401, thus facilitating heat dissipation in the connecting cavity 9. In addition, the flexible conductive parts 8 and the electric connection block 12 are fastened and connected from the outside through the axial ventilation hole 10 to improve the convenience of installation and disassembly, thereby minimizing the size of the connecting surfaces between the rotating shaft 1 and the slip ring shaft 3 and simplifying the machining process.

According to the connecting structure disclosed above, by disposing the excitation conductive structure through the connecting cavity 9, the excitation conductive structure is moved from outer sides of the rotating shaft 1 and the slip ring shaft 3 to the connecting end faces therebetween, thus protecting the excitation conductive structure. In addition, the flexible conductive parts 8 are installed by use of the insulation parts to facilitate achieving insulation between the flexible conductive parts 8 and the connecting end faces, and the thickness of the electric connection block 12 disposed between the flexible conductive parts 8 are set according to an actual gap size, so as to ensure reliable connection of the flexible conductive parts 8 and the reliability of electrical connection. The heat dissipation structure releases the heat produced in the connecting cavity 9 to reduce the temperature in the connecting cavity, so that the excitation conductive structure works at a suitable ambient temperature, thereby reducing the potential safety hazard and effectively prolonging the effective working life of the excitation conductive structure.

The implementations of this embodiment are described above, but this embodiment is not limited to the above optional implementations. Those skilled in the art may obtain various other implementations in any combination according to the way above, and anyone can obtain various other forms of implementations that fall under the scope of the appended claims. The above-mentioned preferred embodiments should not be constructed as limiting the scope of protection of this embodiment, which should be defined by the claims.

## Claims

1. A structure connecting a generator rotating shaft and an external slip ring shaft, **characterized by** comprising:
a rotating shaft (1) and a slip ring shaft (3) in a coaxial butt joint, wherein butt joint faces are provided with a connecting cavity (9) for fixing an excitation conductive structure, and a conductive rod (2) is arranged in each of the rotating shaft (1) and the slip ring shaft (3); the butt joint faces between the rotating shaft (1) and the slip ring shaft (3) are provided with a positioning spigot structure for maintaining the coaxial connection; and a plurality of butting holes are correspondingly arranged on the butt joint faces between the rotating shaft (1) and the slip ring shaft (3), a sleeve pin (13) is provided at each of openings of the butting holes, and the rotating shaft (1) and the slip ring shaft (3) are connected and fixed by connecting pieces (14) passing through the butting holes and the sleeve pins (13);
a plurality of insulation components (5) circumferentially arranged in the connecting cavity (9) at an equidistant interval, which comprise an insulation part connected to each of the rotating shaft (1) and the slip ring shaft (3), wherein the insulation parts comprise two mounting surfaces for installation of flexible conductive parts (8);
the plurality of flexible conductive parts (8) arranged on the mounting surfaces and interconnected with the conductive rods (2), wherein a gap is maintained between the flexible conductive parts (8) connected to the conductive rod (2) on the rotating shaft (1) side and the flexible conductive parts (8) connected to the conductive rod (2) on the slip ring shaft (3) side, and the gap is filled with an electric connection block (12) and is used to conduct the flexible conductive parts (8) on the rotating shaft (1) side and the flexible conductive parts (8) on the slip ring shaft (3) side; and
a heat dissipation structure penetrating into the connecting cavity (9) from an outer surface of the rotating shaft (1) or the slip ring shaft (3).

2. The structure connecting a generator rotating shaft and an external slip ring shaft according to claim 1, **characterized in that** the insulation components (5) further comprise insulating wedges (6) arranged in the connecting cavity (9), and the flexible conductive parts (8) and the electric connection block (12) are insulatively isolated from an inner wall of the connecting cavity (9) by the insulating wedges (6).

3. The structure connecting a generator rotating shaft and an external slip ring shaft according to claim 1 or 2, **characterized in that** the insulation components (5) comprise rotating shaft-side insulation parts (501) matched with a connecting end face of the rotating shaft (1) and slip ring shaft-side insulation parts (502) matched with a connecting end face of the slip ring shaft (3); and the rotating shaft-side insulation parts (501) comprise the mounting surfaces flush with an end face of the conductive rod (2) on the rotating shaft (1) side and are used to connect and fix the flexible conductive parts (8), and the slip ring shaft-side insulation parts (502) comprise the mounting surfaces flush with an end face of the conductive rod (2) on the slip ring shaft (3) side and are used to install the flexible conductive parts (8).

4. The structure connecting a generator rotating shaft and an external slip ring shaft according to claim 3, **characterized in that** the mounting surfaces are provided with insulated retaining edge structures (7), and the insulated retaining edge structures (7) are located at outer sides of the flexible conductive parts (8) and insulatively isolate the flexible conductive parts (8) from the inner wall of the connecting cavity (9).

5. The structure connecting a generator rotating shaft and an external slip ring shaft according to claim 4, **characterized in that** the retaining edge structures (7) are matched with the mounting surfaces to form groove structures, and the flexible conductive parts are blocked on either side by the insulated retaining edge structures to maintain stability.

6. The structure connecting a generator rotating shaft and an external slip ring shaft according to claim 2, **characterized in that** the heat dissipation structure comprises a radial ventilation hole (401) interconnected to the connecting cavity (9) from a side surface of the rotating shaft (1) or the slip ring shaft (3).

7. The structure connecting a generator rotating shaft and an external slip ring shaft according to claim 2 or 6, **characterized in that** the heat dissipation structure comprises an axial ventilation hole (10) interconnected to the connecting cavity (9) from the side surface of the rotating shaft (1) or the slip ring shaft (3) and aligned with the flexible conductive parts (8) and the electric connection block (12).

8. The structure connecting a generator rotating shaft and an external slip ring shaft according to claim 7, **characterized in that** the axial ventilation hole (10) is provided with a blocking member (11), and the blocking member (11) extends in the radial direction and fits with the blocking insulating wedges (6) in the axial direction.

9. The structure connecting a generator rotating shaft and an external slip ring shaft according to claim 8, **characterized in that** the blocking member (11) may be provided with a blocking plate, which fits with an external side wall surface of the axial ventilation hole and is connected and fixed by a fastener.

10. The structure connecting a generator rotating shaft and an external slip ring shaft according to claim 1, **characterized in that** the flexible conductive parts (8) each comprise a flat strip-shaped main body, an upper portion of the main body is configured with an upper group of holes for connecting to the electric connection block (12), and a lower portion of the main body is configured with a lower group of holes for connecting to the conductive rod (2).

## Patentansprüche

1. Struktur, die eine Generatordrehwelle und eine äußere Schleifringwelle verbindet, **dadurch gekennzeichnet, dass** sie Folgendes umfasst:
eine Drehwelle (1) und eine Schleifringwelle (3) in einer koaxialen Stoßverbindung, wobei die Stoßverbindungsflächen mit einem Verbindungshohlraum (9) zum Befestigen einer leitfähigen Erregungsstruktur versehen sind und jeweils in der Drehwelle (1) und der Schleifringwelle (3) ein leitfähiger Stab (2) angeordnet ist; die Stoßverbindungsflächen zwischen der Drehwelle (1) und der Schleifringwelle (3) mit einer Positionierungszapfenstruktur zu der Aufrechterhaltung der koaxialen Verbindung versehen sind; und eine Vielzahl von Anschlaglöchern entsprechend an den Stoßverbindungsflächen zwischen der Drehwelle (1) und der Schleifringwelle (3) angeordnet sind, ein Hülsenstift (13) an jeder Öffnung der Anschlaglöcher vorgesehen ist, und die Drehwelle (1) und die Schleifringwelle (3) durch Verbindungsstücke (14), die durch die Anschlaglöcher und die Hülsenstifte (13) führen, verbunden und befestigt sind;
eine Vielzahl von umlaufend in dem Verbindungshohlraum (9) in gleichem Abstand angeordneten Isolationskomponenten (5), die ein mit jeweils der Drehwelle (1) und der Schleifringwelle (3) verbundenes Isolationsteil umfassen, wobei die Isolationsteile zwei Montageflächen zum Einbau flexibler leitfähiger Teile (8) umfassen;
wobei die Vielzahl von flexiblen leitfähigen Teilen (8) auf den Montageflächen angeordnet und mit den leitfähigen Stäben (2) verbunden sind, wobei ein Spalt zwischen den flexiblen leitfähigen Teilen (8), die auf der Seite der Drehwelle (1) mit dem leitfähigen Stab (2) verbunden sind, und den flexiblen leitfähigen Teilen (8), die auf der Seite der Schleifringwelle (3) mit dem leitfähigen Stab (2) verbunden sind, aufrechterhalten wird, und der Spalt mit einem elektrischen Verbindungsblock (12) gefüllt ist und verwendet wird, um die flexiblen leitfähigen Teile (8) auf der Seite der Drehwelle (1) und die flexiblen leitfähigen Teilen (8) auf der Seite der Schleifringwelle (3) zu leiten; und
eine Wärmeableitungsstruktur, die von einer Außenfläche der Drehwelle (1) oder der Schleifringwelle (3) in den Verbindungshohlraum (9) eindringt.

2. Struktur, die eine Generatordrehwelle und eine äußere Schleifringwelle verbindet, nach Anspruch 1, **dadurch gekennzeichnet, dass** die Isolationskomponenten (5) ferner in dem Verbindungshohlraum (9) angeordnete Isolierkeile (6) umfassen, und die flexiblen leitfähigen Teile (8) und der elektrische Verbindungsblock (12) durch die Isolierkeile (6) isolierend von einer Innenwand des Verbindungshohlraums (9) isoliert sind.

3. Struktur, die eine Generatordrehwelle und eine äußere Schleifringwelle verbindet, nach Anspruch 1 oder 2, **dadurch gekennzeichnet, dass** die Isolationskomponenten (5) Isolationsteile (501) auf der Seite der Drehwelle, die mit einer verbindenden Stirnfläche der Drehwelle (1) abgestimmt sind, und Isolationsteile (502) auf der Seite der Schleifringwelle umfassen, die mit einer verbindenden Stirnfläche der Schleifringwelle (3) abgestimmt sind; und die Isolationsteile (501) auf der Seite der Drehwelle die mit einer Stirnseite des leitfähigen Stabs (2) auf der Seite der Drehwelle (1) bündigen Montageflächen umfassen und verwendet werden, um die flexiblen leitfähigen Teile (8) zu verbinden und zu befestigen, und die Isolationsteile (502) auf der Seite der Schleifringwelle die mit einer Stirnseite des leitfähigen Stabs (2) auf der Seite der Schleifringwelle (3) bündigen Montageflächen umfassen und verwendet werden, um die flexiblen leitfähigen Teile (8) zu verbinden und zu befestigen.

4. Struktur, die eine Generatordrehwelle und eine äußere Schleifringwelle verbindet, nach Anspruch 3, **dadurch gekennzeichnet, dass** die Montageflächen mit isolierten Haltekantenstrukturen (7) versehen sind, und die isolierten Haltekantenstrukturen (7) an Außenseiten der flexiblen leitfähigen Teile (8) angeordnet sind und die flexiblen leitfähigen Teile (8) von der Innenwand des Verbindungshohlraums (9) isolierend isolieren.

5. Struktur, die eine Generatordrehwelle und eine äußere Schleifringwelle verbindet, nach Anspruch 4, **dadurch gekennzeichnet, dass** die Haltekantenstrukturen (7) mit den Montageflächen abgestimmt sind, um Nutstrukturen zu bilden, und die flexiblen leitfähigen Teile beidseitig durch die isolierten Haltekantenstrukturen blockiert sind, um die Stabilität zu erhalten.

6. Struktur, die eine Generatordrehwelle und eine äußere Schleifringwelle nach Anspruch 2 verbindet, **dadurch gekennzeichnet, dass** die Wärmeableitungsstruktur ein radiales Entlüftungsloch (401) umfasst, das von einer Seitenfläche der Drehwelle (1) oder der Schleifringwelle (3) mit dem Verbindungshohlraum (9) verbunden ist.

7. Struktur, die eine Generatordrehwelle und eine äußere Schleifringwelle nach Anspruch 2 oder 6 verbindet, **dadurch gekennzeichnet, dass** die Wärmeableitungsstruktur ein axiales Entlüftungsloch (10) umfasst, das von der Seitenfläche der Drehwelle (1) oder der Schleifringwelle (3) mit dem Verbindungshohlraum (9) verbunden und mit den flexiblen leitfähigen Teilen (8) und dem elektrischen Verbindungsblock (12) ausgerichtet ist.

8. Struktur, die eine Generatordrehwelle und eine äußere Schleifringwelle verbindet, nach Anspruch 7, **dadurch gekennzeichnet, dass** das axiale Entlüftungsloch (10) mit einem Blockierelement (11) versehen ist und das Blockierelement (11) sich in radialer Richtung erstreckt und in axialer Richtung mit den Blockierisolierkeilen (6) übereinstimmt.

9. Struktur, die eine Generatordrehwelle und eine äußere Schleifringwelle verbindet, nach Anspruch 8, **dadurch gekennzeichnet, dass** das Blockierelement (11) mit einer Blockierplatte versehen sein kann, die mit einer äußeren Seitenwandfläche des axialen Entlüftungslochs übereinstimmt und durch ein Befestigungselement verbunden und befestigt ist.

10. Struktur, die eine Generatordrehwelle und eine äußere Schleifringwelle verbindet, nach Anspruch 1, **dadurch gekennzeichnet, dass** die flexiblen leitfähigen Teile (8) jeweils einen flachstreifenförmigen Hauptkörper umfassen, ein oberer Abschnitt des Hauptkörpers mit einer oberen Gruppe von Löchern zum Anschluss an den elektrischen Anschlussblock (12) ausgebildet ist, und ein unterer Abschnitt des Hauptkörpers mit einer unteren Gruppe von Löchern zum Anschluss an den leitfähigen Stab (2) ausgebildet ist.

## Revendications

1. Structure connectant un arbre rotatif de générateur et un arbre à bague collectrice externe, **caractérisée en ce qu'**elle comporte :
un arbre rotatif (1) et un arbre à bague collectrice (3) dans un assemblage bout à bout coaxial, dans laquelle des faces d'assemblage bout à bout sont pourvues d'une cavité de connexion (9) pour fixer une structure conductrice d'excitation, et une tige conductrice (2) est agencée dans chacun de l'arbre rotatif (1) et de l'arbre à bague collectrice (3) ; les faces d'assemblage bout à bout entre l'arbre rotatif (1) et l'arbre à bague collectrice (3) sont pourvues d'une structure d'ergot de positionnement pour maintenir la connexion coaxiale ; et une pluralité de trous d'aboutement sont agencés de manière correspondante sur les faces d'assemblage bout à bout entre l'arbre rotatif (1) et l'arbre à bague collectrice (3), une goupille à manchon (13) est prévue au niveau de chacune des ouvertures des trous d'aboutement, et l'arbre rotatif (1) et l'arbre à bague collectrice (3) sont connectés et fixés par des pièces de connexion (14) passant à travers les trous d'aboutement et les goupilles à manchon (13) ;
une pluralité de composants isolants (5) agencés circonférentiellement dans la cavité de connexion (9) à un intervalle équidistant, qui comportent une pièce isolante connectée à chacun de l'arbre rotatif (1) et de l'arbre à bague collectrice (3), dans laquelle les pièces isolantes comportent deux surfaces de montage pour l'installation de pièces conductrices flexibles (8) ;
la pluralité de pièces conductrices flexibles (8) agencées sur les surfaces de montage et interconnectées avec les tiges conductrices (2), dans laquelle un espace est maintenu entre les pièces conductrices flexibles (8) connectées à la tige conductrice (2) du côté de l'arbre rotatif (1) et les pièces conductrices flexibles (8) connectées à la tige conductrice (2) du côté de l'arbre à bague collectrice (3), et l'espace est rempli d'un bloc de connexion électrique (12) et est utilisé pour conduire les pièces conductrices flexibles (8) du côté de l'arbre rotatif (1) et les pièces conductrices flexibles (8) du côté de l'arbre à bague collectrice (3) ; et
une structure de dissipation de chaleur pénétrant dans la cavité de connexion (9) à partir d'une surface extérieure de l'arbre rotatif (1) ou de l'arbre à bague collectrice (3) .

2. Structure connectant un arbre rotatif de générateur et un arbre à bague collectrice externe selon la revendication 1, **caractérisée en ce que** les composants isolants (5) comportent en outre des coins isolants (6) agencés dans la cavité de connexion (9), et les pièces conductrices flexibles (8) et le bloc de connexion électrique (12) sont isolés de manière isolante d'une paroi intérieure de la cavité de connexion (9) par les coins isolants (6).

3. Structure connectant un arbre rotatif de générateur et un arbre à bague collectrice externe selon la revendication 1 ou 2, **caractérisée en ce que** les composants isolants (5) comportent des pièces isolantes côté arbre rotatif (501) assorties à une face d'extrémité de connexion de l'arbre rotatif (1) et des pièces isolantes côté arbre à bague collectrice (502) assorties à une face d'extrémité de connexion de l'arbre à bague collectrice (3) ; et les pièces isolantes côté arbre rotatif (501) comportent les surfaces de montage à fleur d'une face d'extrémité de la tige conductrice (2) côté arbre rotatif (1) et sont utilisées pour connecter et fixer les pièces conductrices flexibles (8), et les pièces isolantes côté arbre à bague collectrice (502) comportent les surfaces de montage à fleur d'une face d'extrémité de la tige conductrice (2) côté arbre à bague collectrice (3) et sont utilisées pour installer les pièces conductrices flexibles (8).

4. Structure connectant un arbre rotatif de générateur et un arbre à bague collectrice externe selon la revendication 3, **caractérisée en ce que** les surfaces de montage sont pourvues de structures de bord de retenue isolées (7), et les structures de bord de retenue isolées (7) sont situées au niveau des côtés extérieurs des pièces conductrices flexibles (8) et isolent de manière isolante les pièces conductrices flexibles (8) par rapport à la paroi intérieure de la cavité de connexion (9).

5. Structure connectant un arbre rotatif de générateur et un arbre à bague collectrice externe selon la revendication 4, **caractérisée en ce que** les structures de bord de retenue (7) sont assorties aux surfaces de montage pour former des structures de rainure, et les pièces conductrices flexibles sont bloquées de part et d'autre par les structures de bord de retenue isolées pour maintenir la stabilité.

6. Structure connectant un arbre rotatif de générateur et un arbre à bague collectrice externe selon la revendication 2, **caractérisée en ce que** la structure de dissipation de chaleur comporte un trou de ventilation radial (401) interconnecté à la cavité de connexion (9) à partir d'une surface latérale de l'arbre rotatif (1) ou de l'arbre à bague collectrice (3).

7. Structure connectant un arbre rotatif de générateur et un arbre à bague collectrice externe selon la revendication 2 ou 6, **caractérisée en ce que** la structure de dissipation de chaleur comporte un trou de ventilation axial (10) interconnecté à la cavité de connexion (9) à partir de la surface latérale de l'arbre rotatif (1) ou l'arbre à bague collectrice (3) et aligné avec les pièces conductrices flexibles (8) et le bloc de connexion électrique (12).

8. Structure connectant un arbre rotatif de générateur et un arbre à bague collectrice externe selon la revendication 7, **caractérisée en ce que** le trou de ventilation axial (10) est pourvu d'un organe de blocage (11), et l'organe de blocage (11) s'étend dans la direction radiale et s'ajuste avec les coins isolants de blocage (6) dans la direction axiale.

9. Structure connectant un arbre rotatif de générateur et un arbre à bague collectrice externe selon la revendication 8, **caractérisée en ce que** l'organe de blocage (11) peut être pourvu d'une plaque de blocage, qui s'ajuste avec une surface de paroi latérale externe du trou de ventilation axial et est connectée et fixée par une fixation.

10. Structure connectant un arbre rotatif de générateur et un arbre à bague collectrice externe selon la revendication 1, **caractérisée en ce que** les pièces conductrices flexibles (8) comportent chacune un corps principal en forme de bande plate, une portion supérieure du corps principal est configurée avec un groupe supérieur de trous pour la connexion au bloc de connexion électrique (12), et une portion inférieure du corps principal est configurée avec un groupe inférieur de trous pour la connexion à la tige conductrice (2).
